# EUROPÄISCHE PATENTSCHRIFT

(11) **EP 3 312 595 B1**
(45) Veröffentlichungstag und Bekanntmachung des Hinweises auf die Patenterteilung: **30.04.2025**
(21) Anmeldenummer: 17195916.6
(22) Anmeldetag: 11.10.2017
(51) Int. Cl.: G01N 21/89, G01N 21/88, H04N 25/46

(54) **VERFAHREN UND VORRICHTUNG ZUR KOMPENSATION EINES MATERIALBAHNVERSATZES BEI DER MATERIALBAHNINSPEKTION**
METHOD AND DEVICE FOR COMPENSATING FOR A MATERIAL WEB OFFSET IN THE MATERIAL WEB INSPECTION
PROCÉDÉ ET DISPOSITIF DE COMPENSATION DE L'EFFET DE DIFFÉRENCE DE RÉSISTANCE DES BANDES DE MATÉRIAU DURANT UNE INSPECTION DE BANDES DE MATÉRIAU

(30) Priorität: 21.10.2016 DE 102016220759
(43) Veröffentlichungstag der Anmeldung: 25.04.2018
(73) Patentinhaber: Texmag GmbH Vertriebsgesellschaft, 8800 Thalwil (CH)
(72) Erfinder: Herrmann, Markus, 86159 Augsburg (DE); Kröhn, Manfred, 86156 Augsburg (DE)
(74) Vertreter: Peterreins Schley

(56) Entgegenhaltungen:
- DE-A1- 10 301 379
- DE-A1- 102015 105 656
- DE-B3- 102012 101 310
- JP-A- 2008 286 646
- US-A1- 2010 214 416
- US-A1- 2011 205 384
- US-A1- 2012 013 733
- US-A1- 2012 281 121

## Beschreibung

### Gebiet der Erfindung

Die vorliegende Erfindung betrifft ein Verfahren und eine Vorrichtung zur Kompensation eines Materialbahnversatzes bei Beobachtungs- und Inspektionssystemen für Maschinen mit kontinuierlich fortbewegten Erzeugnissen, wie zum Beispiel Materialbahnen.

### Hintergrund der Erfindung

Bei der Produktion von als Materialbahnen hergestellten Erzeugnissen, insbesondere auch Druckerzeugnisse wie beispielsweise Etiketten oder Verpackungen, ist eine Beobachtung und/oder automatisierte Qualitätssicherung nach dem Druck von hoher Bedeutung, um das Druckergebnis zu überprüfen. Dabei kann neben einer automatisierten Überwachung auch eine Unterstützung einer visuellen Überwachung durch einen Bediener vorgesehen sein. Bei dieser Art der Qualitätssicherung werden die Materialbahnen unter Beobachtungs- oder Inspektionssystemen hindurchgeführt, die Bilder der Materialbahnen aufnehmen. Diese Bilder können durch einen Bediener oder automatisch überprüft werden. Um eine hohe Qualität der Bilder zu garantieren, können die Materialbahnen für die Aufnahmen über entsprechende Vorrichtungen beleuchtet werden. Bahnbeobachtungssysteme sind zum Beispiel aus JP 2008 286646 A, DE 10 2012 101 310 B3, DE 10 2015 105 656 A1 und US 2010/214416 A1 bekannt. Die US 2012/281121 A1 beschreibt ein Gerät zum selektiven Pixel-Binning. Hierbei offenbart das bereits genannte Dokument JP 2008 286646 A eine Vorrichtung zur Inspektion von Materialbahnen, bei der zwei in Transportrichtung der Materialbahn verschiedene Teilbereiche eines Matrixkamerachips zu mehreren Zeitpunkten t, t+1, t+2 ausgelesen werden und diese beiden Teilbereiche dann jeweils zu einem zusammengefügten Bild verarbeitet werden, so dass zwei zusammengefügte Bilder vorliegen.

Bei einer besonderen Art der Inspektion, der sogenannten Multiinspektion, wird versucht die komplette Materialbahn (100% Inspektion) mit zwei Beleuchtungsarten zu erfassen. Es können aber auch mehr als zwei, also drei, vier oder fünf Beleuchtungsarten zum Einsatz kommen. Die bedingte alternierende bzw. zeitversetzte Bildaufnahme mit unterschiedlichen Beleuchtungsarten und Aufnahmeparameter ermöglicht z.B. die Auswertung zweier Bildsequenzen mit unterschiedlichen Informationen. Hier entsteht jedoch ein Versatz zwischen den einzelnen Bildaufnahmen bzw. Bildsequenzen in Richtung der Materialbahnbewegung, welche z.B. im Auflicht und im Durchlicht aufgenommen wurden. Die Auswirkungen des Versatzes können umso größer werden, je schneller die Bahngeschwindigkeit, je genauer die Auflösung des Matrixchips und je größer das Delay zwischen den Bildaufnahmen bzw. Bildsequenzen ist. In bekannten Inspektionssystemen wird versucht diesen Versatz aufwändig über Software und entsprechende Rechnerleistung zu kompensieren, da die Bildsequenzen der zwei (oder mehr) Inspektionsarten für eine Auswertung exakt übereinander zu legen sind, um die gleiche Referenzierung bzw. den gleichen Bezug (bei Inspektionsfehlern) zum bewegten Objekt angeben zu können. Andererseits besteht auch die Möglichkeit einen geringen Versatz zu ignorieren, was aber nicht befriedigend ist. Bei anderen Systemen mit Softwarekompensation wird meist ein Algorithmus zur Bildstabilisierung verwendet, bei dem nach einem Pattern-Matching mit Hilfe von Registrierzonen gleiche Muster übereinandergelegt werden. Bei unterschiedlichen Beleuchtungen und somit auch anderen Bildinformationen hat man aber den Nachteil, dass man eventuell nur schwer identische Pattern findet. Eine gleiche Beleuchtung wird hier eigentlich vorausgesetzt. Dies über die Software zu kompensieren ist zum einen sehr aufwändig und zum anderen bei Multiinspektionssystemen zum Teil gar nicht möglich bzw. unbefriedigend. Auch die Eigenschaften der Materialbahn, welche transparent, transluzent, opak oder gemischtförmig sein kann, können Auswirkungen auf eine nicht befriedigte Softwarekompensation haben.

Ziel der vorliegenden Erfindung ist es folglich eine Vorrichtung und ein Verfahren bereitzustellen, welche die Nachteile der Softwarekompensation beseitigen.

### Zusammenfassung der Erfindung

Die vorliegende Erfindung betrifft ein Verfahren zur Kompensation eines Materialbahnversatzes bei Inspektionssystemen für Materialbahnen gemäß Anspruch 1 sowie eine Vorrichtung zur Beobachtung und/oder Inspektion von Materialbahnen gemäß Anspruch 8.

Das erfindungsgemäße Verfahren zur Kompensation eines Materialbahnversatzes bei Inspektionssystemen für Materialbahnen, die sich in Richtung einer Materialbahnlänge und/oder einer Materialbahnbreite bewegen, umfasst die folgenden Schritte: Erstellen einer ersten Aufnahme eines ersten Abschnitts einer Materialbahn zu einem ersten Zeitpunkt mit einer Kamera, die einen Matrixchip umfasst; und Erstellen einer zweiten Aufnahme eines zweiten Abschnitts der Materialbahn zu einem zweiten Zeitpunkt mit der Kamera, wobei für die erste Aufnahme ausschließlich eine erste aktive Teilfläche des Matrixchips zu dem ersten Zeitpunkt aktiviert wird und für die zweite Aufnahme ausschließlich eine zweite aktive Teilfläche des Matrixchips zu dem zweiten Zeitpunkt aktiviert wird, und wobei die erste aktive Teilfläche und die zweite aktive Teilfläche nicht identisch sind. Eine zeitliche Verschiebung zwischen der ersten und der zweiten Aufnahme ist entweder fest vorgegeben oder wird entsprechend der Materialbahnbewegung angepasst und ist abhängig von einem ersten Trigger, der die erste Aufnahme zu dem ersten Zeitpunkt auslöst, und einem zweiten Trigger, der die zweite Aufnahme zu dem zweiten Zeitpunkt auslöst.

Die dynamische Anpassung der vom Matrixchip genutzten aktiven Teilfläche ermöglicht eine direkte und exakte Synchronisation zweier Bildsequenzen einer Materialbahn und ist unabhängig von den Eigenschaften der Materialbahn (welche zum Beispiel für eine Softwarekompensation des Versatzes benötigt werden). Durch diese Regelung können zwei (oder mehr) zu minimal unterschiedlichen Zeiten aufgenommenen Bildsequenzen direkt erfasst und exakt übereinandergelegt werden. Eine aufwändige oder zum Teil gar nicht realisierbare oder zumindest nicht zufriedenstellende Kompensation eines Versatzes in Richtung der Materialbahnlänge bei den Aufnahmen über Softwareauswertung kann somit entfallen. Außerdem kann durch eine Verkleinerung der aktiven Fläche des Matrixchips die Bildaufnahmefrequenz erhöht werden. Dies ist insbesondere bei Multiinspektionen (also bei Inspektionen mit unterschiedlichen Beleuchtungsarten) von bewegten Objekten vorteilhaft. Durch das erfindungsgemäße Verfahren kann also eine optimale Referenzierung (Hardwarekompensation) von mehreren Bildsequenzen erfolgen. Folglich wird eine exakte 100% Inspektion einer Materialbahn auch für Multiinspektionssysteme mit unterschiedlichen Beleuchtungsarten und ohne die Verwendung zusätzlicher Softwarekompensation zur Referenzierung ermöglicht. Dies führt zusätzlich zu einem Einsparpotential für die benötigte Rechnerleistung.

In Ausgestaltungen kann eine Größe und/oder eine Position der ersten und zweiten aktiven Teilflächen des Matrixchips und dadurch der Sichtbereich der Kamera in Richtung der Materialbahnlänge und/oder in Richtung der Materialbahnbreite dynamisch angepasst werden.

In Ausgestaltungen, die mit allen bisher beschriebenen Ausgestaltungen kombinierbar sind, können der erste Abschnitt und der zweite Abschnitt zwei identische Materialbahnabschnitte sein. Alternativ können der erste Abschnitt und der zweite Abschnitt zwei unterschiedliche Materialbahnabschnitte sein.

Die zweite aktive Teilfläche ist im Vergleich zur ersten aktiven Teilfläche um einen vorgegebenen Versatz in Richtung der Materialbahnlänge und/oder in Richtung der Materialbahnbreite versetzt. Dies ist vorteilhaft, da somit sowohl ein Versatz der Materialbahn in Richtung der Materialbahnlänge als auch ein Versatz der Materialbahn Richtung der Materialbahnbreite über die Hardware ausgeglichen werden kann. Dies ist insbesondere von Vorteil, falls zum Beispiel die Materialbahnkanten für einen Versatz in Richtung der Materialbahnbreite (bezüglich einer möglichen Softwarekompensation) nicht erfasst werden können bzw. der Sichtbereich an den Nutzen der Materialbahnbreite angepasst wird. Dadurch ist eine weitere Erhöhung der Bildaufnahmefrequenz möglich, wenn sowohl in Richtung der Materialbahnlänge als auch in Richtung der Materialbahnbreite eingeschränkte Teilflächen des Matrixchips aktiviert sind. Mit Hilfe eines Positionssensors kann es außerdem ermöglicht werden, dass der Sichtbereich in Richtung der Materiabahnbreite an die verwendete Materialbahnbreite angepasst wird, ohne die Materialbahnkanten berücksichtigen zu müssen.

In Ausgestaltungen, die mit allen bisher beschriebenen Ausgestaltungen kombinierbar sind, kann die erste Aufnahme Teil einer ersten Bildsequenz der Materialbahn und die zweite Aufnahme Teil einer zweiten Bildsequenz der Materialbahn sein. Eine erste Sequenz kann mit einer Vielzahl an ersten Aufnahmen erstellt werden, um die erste Bildsequenz der Materialbahn zu erzeugen und eine zweite Sequenz kann mit einer Vielzahl an zweiten Aufnahmen erstellt werden, um die zweite Bildsequenz der Materialbahn zu erzeugen. Dabei können alle Aufnahmen der ersten Bildsequenz mit der ersten aktiven Teilfläche des Matrixchips und alle Aufnahmen der zweiten Bildsequenz mit der zweiten aktiven Teilfläche des Matrixchips aufgenommen werden oder die zweite aktive Teilfläche des Matrixchips für die Aufnahmen der zweiten Bildsequenz jeweils angepasst werden.

In Ausgestaltungen, die mit allen bisher beschriebenen Ausgestaltungen kombinierbar sind, kann die Materialbahn für die ersten und zweiten Aufnahmen mit einer ersten Beleuchtungsart beleuchtet werden. Alternativ kann für die erste Aufnahme die Materialbahn mit einer ersten Beleuchtungsart beleuchtet werden und für die zweite Aufnahme die Materialbahn mit einer zweiten Beleuchtungsart beleuchtet werden. Es kann von einer Vielzahl von in Richtung der Materialbahnlänge aufeinanderfolgenden Abschnitten der Materialbahn jeweils eine erste Aufnahme mit der ersten Beleuchtungsart und jeweils eine zweite Aufnahme mit der zweiten Beleuchtungsart erstellt werden, wobei die ersten Aufnahmen zusammen eine erste Bildsequenz der Materialbahn ergeben und die zweiten Aufnahmen eine zweite Bildsequenz der Materialbahn ergeben. Zumindest eine der ersten und zweiten Bildsequenzen können für eine Bahnbeobachtung und/oder eine Inspektion verwendet werden. Insbesondere können die ersten und/oder die zweiten Bildsequenzen für einen Benutzer visuell angezeigt werden.

Die Materialbahn kann für die erste und/oder die zweite Aufnahme im gesamten Sichtbereich der Kamera beleuchtet werden. Alternativ kann die Materialbahn jeweils entsprechend der ersten und zweiten aktiven Teilflächen des Matrixchips selektiv beleuchtet werden. Die Beleuchtung der Materialbahn kann, bezogen auf die Richtung der Materialbahnbreite, traversierend erfolgen. Es können außerdem weitere Aufnahmen entsprechender weiterer Abschnitte zu entsprechenden weiteren Zeitpunkten unter Verwendung entsprechender weiterer aktiver Teilflächen des Matrixchips erstellt werden, wobei die weiteren Abschnitte mit dem ersten Abschnitt und/oder dem zweiten Abschnitt identisch sind. Für die weiteren Aufnahmen können weitere Beleuchtungsarten zur Beleuchtung der Materialbahn verwendet werden.

Die Beleuchtungsarten können zum Beispiel ausgewählt werden aus der Gruppe bestehend aus Auflichtbeleuchtungen, Hintergrundbeleuchtungen und Durchlichtbeleuchtungen.

In Ausgestaltungen, die mit allen bisher beschriebenen Ausgestaltungen kombinierbar sind, kann ein Sichtbereich der Kamera ausgelegt sein, um zumindest die gesamte Materialbahnbreite abzudecken. Insbesondere kann der Sichtbereich der Kamera in Richtung der Materialbahnbreite größer sein als die Materialbahnbreite. Basierend auf einem Signal eines Materialbahn-Positionssensors können die ersten und zweiten aktiven Teilflächen eingestellt werden, insbesondere eine Größe und/oder eine Position der ersten und zweiten aktiven Teilflächen in Richtung der Materialbahnbreite.

In Ausgestaltungen, die mit allen bisher beschriebenen Ausgestaltungen kombinierbar sind, kann der zweite Zeitpunkt zeitlich um 0,0001 bis 0,01 Sekunden, insbesondere um 0,0005 bis 0,001 Sekunden versetzt zum ersten Zeitpunkt liegen.

Die Materialbahn kann mit einer Bahngeschwindigkeit von mindestens 150 m/min, insbesondre mindestens 500 m/min bevorzugt mindestens 900 m/min in Richtung der Materialbahnlänge bewegt werden.

In Ausgestaltungen, die mit allen bisher beschriebenen Ausgestaltungen kombinierbar sind, kann außerdem ein Sensor zum Ermitteln der zurückgelegten Wegstrecke oder der Geschwindigkeit der Materialbahn in Richtung der Materialbahnlänge bereitgestellt werden.

In Ausgestaltungen, die mit allen bisher beschriebenen Ausgestaltungen kombinierbar sind, kann eine zurückgelegte Wegstrecke der Materialbahn in Richtung der Materialbahnlänge gemessen werden und darüber der erste Zeitpunkt für die erste Aufnahme und/oder der zweite Zeitpunkt für die zweite Aufnahme berechnet und der Kamera bereitgestellt werden.

Alternativ kann eine Geschwindigkeit der Materialbahn gemessen werden und darüber eine zeitliche Verschiebung zwischen der ersten Aufnahme und der zweiten Aufnahme steuerbar sein.

In Ausgestaltungen, die mit allen bisher beschriebenen Ausgestaltungen kombinierbar sind, kann eine Mehrzahl an Kameras mit Matrixchip vorgesehen sein, wobei die Kameras über die Materialbahnbreite verteilt angeordnet sind, so dass die Sichtbereiche der Kameras in Richtung der Materialbahnbreite aneinander angrenzen oder überlappen, wobei die Mehrzahl an Kameras entsprechende erste und zweite Aufnahmen erstellt und die ersten und zweiten Aufnahmen zu zwei zusammenhängenden Bildsequenzen zusammengesetzt werden.

In Ausgestaltungen, die mit allen bisher beschriebenen Ausgestaltungen kombinierbar sind, kann der Sichtbereich der Kamera traversierend bezogen auf die Richtung der Materialbahnbreite angeordnet sein. Zusätzlich oder alternativ kann, falls eine Mehrzahl an Kameras vorgesehen ist, die Mehrzahl an Kameras bezogen auf die Richtung der Materialbahnbreite traversierend angeordnet sein.

In Ausgestaltungen, die mit allen bisher beschriebenen Ausgestaltungen kombinierbar sind, können mindestens eine Kamera auf einer Vorderseite der Materialbahn und mindestens eine Kamera auf einer Rückseite der Materialbahn vorgesehen sein und jeweils erste und zweite Aufnahmen der Vorderseite und der Rückseite der Materialbahn erstellen.

Die Erfindung umfasst außerdem eine Vorrichtung zur Beobachtung und/oder Inspektion von Materialbahnen, die sich in Richtung einer Materialbahnlänge und/oder einer Materialbahnbreite bewegen. Die Vorrichtung umfasst eine Kamera, die einen Matrixchip aufweist, wobei Teilflächen des Matrixchips unabhängig voneinander aktiviert werden können, und eine Steuereinheit. Die Steuereinheit ist ausgelegt zu veranlassen, dass ausschließlich eine erste Teilfläche des Matrixchips aktiviert wird, um eine erste Aufnahme eines ersten Abschnitts der Materialbahn zu einem ersten Zeitpunkt zu erstellen; ausschließlich eine zweite Teilfläche des Matrixchips aktiviert wird, um eine zweite Aufnahme eines zweiten Abschnitts der Materialbahn zu einem zweiten Zeitpunkt zu erstellen, wobei die erste aktive Teilfläche und die zweite aktive Teilfläche nicht identisch sind. Eine zeitliche Verschiebung zwischen der ersten und der zweiten Aufnahme ist entweder fest vorgegeben oder wird entsprechend der Materialbahnbewegung angepasst und ist abhängig von einem ersten Trigger, der die erste Aufnahme zu dem ersten Zeitpunkt auslöst, und einem zweiten Trigger, der die zweite Aufnahme zu dem zweiten Zeitpunkt auslöst.

In Ausgestaltungen kann eine Größe und/oder eine Position der ersten und zweiten aktiven Teilflächen des Matrixchips und dadurch der Sichtbereich der Kamera in Richtung der Materialbahnlänge und/oder in Richtung der Materialbahnbreite dynamisch angepasst werden.

In Ausgestaltungen der Vorrichtung, die mit allen bisher beschriebenen Ausgestaltungen kombinierbar sind, können der erste Abschnitt und der zweite Abschnitt zwei identische Materialbahnabschnitte sein. Alternativ können der erste Abschnitt und der zweite Abschnitt zwei unterschiedliche Materialbahnabschnitte sein.

Die Steuereinheit ist ausgelegt, die ersten und zweiten aktiven Teilflächen so auszuwählen, dass die zweite aktive Teilfläche im Vergleich zur ersten aktiven Teilfläche um einen vorgegebenen Versatz in Richtung der Materialbahnlänge und/oder in Richtung der Materialbahnbreite versetzt ist.

In Ausgestaltungen der Vorrichtung, die mit allen bisher beschriebenen Ausgestaltungen kombinierbar sind, kann die erste Aufnahme Teil einer ersten Bildsequenz der Materialbahn und die zweite Aufnahme Teil einer zweiten Bildsequenz der Materialbahn sein. Die Steuereinheit kann ausgelegt sein zu veranlassen, dass eine erste Sequenz mit einer Vielzahl an ersten Aufnahmen erstellt wird, um die erste Bildsequenz der Materialbahn zu erzeugen und eine zweite Sequenz mit einer Vielzahl an zweiten Aufnahmen erstellt wird, um die zweite Bildsequenz der Materialbahn zu erzeugen. Die Steuereinheit kann ausgelegt sein zu veranlassen, dass alle Aufnahmen der ersten Bildsequenz mit der ersten aktiven Teilfläche des Matrixchips und alle Aufnahmen der zweiten Bildsequenz mit der zweiten aktiven Teilfläche des Matrixchips aufgenommen werden oder die zweite aktive Teilfläche des Matrixchips für die Aufnahmen der zweiten Bildsequenz jeweils angepasst werden.

In Ausgestaltungen der Vorrichtung, die mit allen bisher beschriebenen Ausgestaltungen kombinierbar sind, kann die Vorrichtung eine erste Beleuchtungseinrichtung aufweisen, so dass die Materialbahn für die ersten und zweiten Aufnahmen mit einer ersten Beleuchtungsart beleuchtet werden kann. Alternativ kann die Vorrichtung erste und zweite Beleuchtungseinrichtungen aufweisen, so dass für die erste Aufnahme der Materialbahn eine erste Beleuchtungsart verwendet werden kann und für die zweite Aufnahme der Materialbahn eine zweite Beleuchtungsart verwendet werden kann. Die Steuereinheit kann ausgelegt sein zu veranlassen, dass von einer Vielzahl von in Richtung der Materialbahnlänge aufeinanderfolgenden Abschnitten der Materialbahn jeweils eine erste Aufnahme mit der ersten Beleuchtungsart und jeweils eine zweite Aufnahme mit der zweiten Beleuchtungsart erstellt werden, wobei die ersten Aufnahmen zusammen eine erste Bildsequenz der Materialbahn ergeben und die zweiten Aufnahmen eine zweite Bildsequenz der Materialbahn ergeben. Die Steuereinheit kann ausgelegt sein zu veranlassen, dass die Materialbahn für die erste und/oder die zweite Aufnahme im gesamten Sichtbereich der Kamera beleuchtet wird, oder, dass die Materialbahn jeweils entsprechend der ersten und zweiten aktiven Teilflächen des Matrixchips selektiv beleuchtet wird. Die erste und/oder die zweite Beleuchtungseinrichtung können, bezogen auf die Richtung der Materialbahnbreite, traversierend angeordnet sein. Die Steuereinheit kann ausgelegt sein zu veranlassen, dass weitere Teilflächen des Matrixchips aktiviert werden, um weitere Aufnahmen entsprechender weiterer Abschnitte zu entsprechenden weiteren Zeitpunkten zu erstellen, wobei die weiteren Abschnitte mit dem ersten Abschnitt und/oder dem zweiten Abschnitt identisch sind. Insbesondere kann die Vorrichtung weitere Beleuchtungseinrichtungen umfassen, so dass für die weiteren Aufnahmen die Materialbahn mit weiteren Beleuchtungsarten beleuchtet werden kann. Die Beleuchtungseinrichtungen können ausgelegt sein, um mindestens eine Beleuchtungsart bereitzustellen ausgewählt aus der Gruppe bestehend aus Auflichtbeleuchtungen, Hintergrundbeleuchtungen und Durchlichtbeleuchtungen.

In Ausgestaltungen der Vorrichtung, die mit allen bisher beschriebenen Ausgestaltungen kombinierbar sind, kann die Kamera einen Sichtbereich aufweisen, um zumindest die gesamte Materialbahnbreite abzudecken. Insbesondere kann der Sichtbereich der Kamera in Richtung der Materialbahnbreite größer sein als die Materialbahnbreite. Die Vorrichtung kann außerdem einen Materialbahn-Positionssensor aufweisen und die Steuereinheit kann weiterhin ausgelegt sein zu veranlassen, dass basierend auf einem Signal des Materialbahn-Positionssensors die ersten und zweiten aktiven Teilflächen eingestellt werden, insbesondere eine Größe und/oder eine Position der ersten und zweiten aktiven Teilflächen in Richtung der Materialbahnbreite eingestellt werden.

In Ausgestaltungen der Vorrichtung, die mit allen bisher beschriebenen Ausgestaltungen kombinierbar sind, kann die Steuereinheit ausgelegt sein zu veranlassen, dass der zweite Zeitpunkt zeitlich um 0,0001 bis 0,01 Sekunden, insbesondere um 0,0005 bis 0,001 Sekunden versetzt zum ersten Zeitpunkt liegen.

In Ausgestaltungen der Vorrichtung, die mit allen bisher beschriebenen Ausgestaltungen kombinierbar sind, kann außerdem ein Sensor zum Ermitteln der zurückgelegten Wegstrecke oder der Geschwindigkeit der Materialbahn in Richtung der Materialbahnlänge bereitstellen werden.

In Ausgestaltungen der Vorrichtung, die mit allen bisher beschriebenen Ausgestaltungen kombinierbar sind, kann die Vorrichtung ausgelegt sein eine zurückgelegte Wegstrecke der Materialbahn in Richtung der Materialbahnlänge zu messen und darüber den ersten Zeitpunkt für die erste Aufnahme und/oder den zweiten Zeitpunkt für die zweite Aufnahme zu berechnen und der Kamera bereitzustellen.

Alternativ kann die Vorrichtung ausgelegt sein, die Geschwindigkeit der Materialbahn zu messen und darüber eine zeitliche Verschiebung zwischen der ersten Aufnahme und der zweiten Aufnahme zu steuern.

In Ausgestaltungen der Vorrichtung, die mit allen bisher beschriebenen Ausgestaltungen kombinierbar sind, kann eine Mehrzahl an Kameras mit Matrixchip vorgesehen sein, wobei die Kameras verteilt über die Materialbahnbreite angeordnet sind, so dass die Sichtbereiche der Mehrzahl an Kameras in Richtung der Materialbahnbreite aneinander angrenzen oder überlappen. Die Steuereinheit kann ausgelegt sein zu veranlassen, dass die Mehrzahl an Kameras entsprechende erste und zweite Aufnahmen erstellt und die ersten und zweiten Aufnahmen zu zwei zusammenhängenden Bildsequenzen zusammengesetzt werden.

In Ausgestaltungen der Vorrichtung, die mit allen bisher beschriebenen Ausgestaltungen kombinierbar sind, kann der Sichtbereich der Kamera traversierend bezogen auf die Richtung der Materialbahnbreite angeordnet sein und/oder, falls eine Mehrzahl an Kameras vorgesehen ist, kann die Mehrzahl an Kameras bezogen auf die Richtung der Materialbahnbreite traversierend angeordnet sein.

In Ausgestaltungen der Vorrichtung, die mit allen bisher beschriebenen Ausgestaltungen kombinierbar sind, kann mindestens eine Kamera auf einer Vorderseite der Materialbahn und mindestens eine Kamera auf einer Rückseite der Materialbahn vorgesehen sein, wobei die Steuereinheit ausgelegt ist zu veranlassen, dass jeweils erste und zweite Aufnahmen der Vorderseite und der Rückseite der Materialbahn erstellt werden.

In Ausgestaltungen der Vorrichtung, die mit allen bisher beschriebenen Ausgestaltungen kombinierbar sind, kann die Vorrichtung außerdem ein Objektiv mit fester Brennweite umfassen.

Weitere Einzelheiten und Merkmale der Erfindung werden anhand der folgenden Figuren beschrieben.

### Kurzbeschreibung der Figuren

- Fig. 1: zeigt eine schematische Darstellung einer erfindungsgemäßen Vorrichtung zur Materialbahnbeobachtung bzw. Materialbahninspektion gemäß einem Ausführungsbeispiel;
- Fig. 2: zeigt zwei Ansichten einer Materialbahn mit darüber gelegten Bildsequenzen;
- Fig. 3: zeigt zwei schematische Darstellungen eines Matrixchips mit entsprechend aktivierten Teilflächen;
- Fig. 4: zeigt zwei weitere schematische Darstellungen eines Matrixchips mit entsprechend aktivierten Teilflächen.

### Detaillierte Beschreibung

Der im Folgenden verwendete Begriff Materialbahn ist breit zu verstehen und bezieht sich auf alle Arten von Produkten, die bei der Verarbeitung automatisiert bewegt werden und für die eine Beobachtung oder Inspektion erforderlich ist. Dazu gehören unter anderen bedruckte Papiererzeugnisse, Stoffe und Gewebe, Verpackungen bzw. Verpackungsrohmaterial, Etiketten, usw. Die Materialbahnen müssen dabei nicht endlos fortlaufend ausgestaltet sein sondern können auch die Form von aufeinanderfolgenden Bögen haben. Die erfindungsgemäße Vorrichtung sowie das erfindungsgemäße Verfahren können für eine Beobachtung und/oder Inspektion für alle diese Produkte eingesetzt werden.

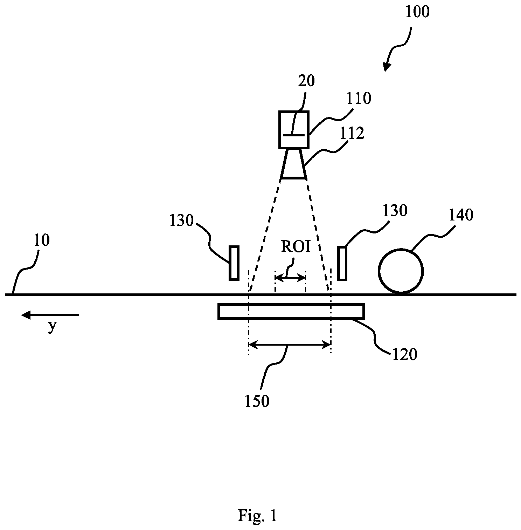

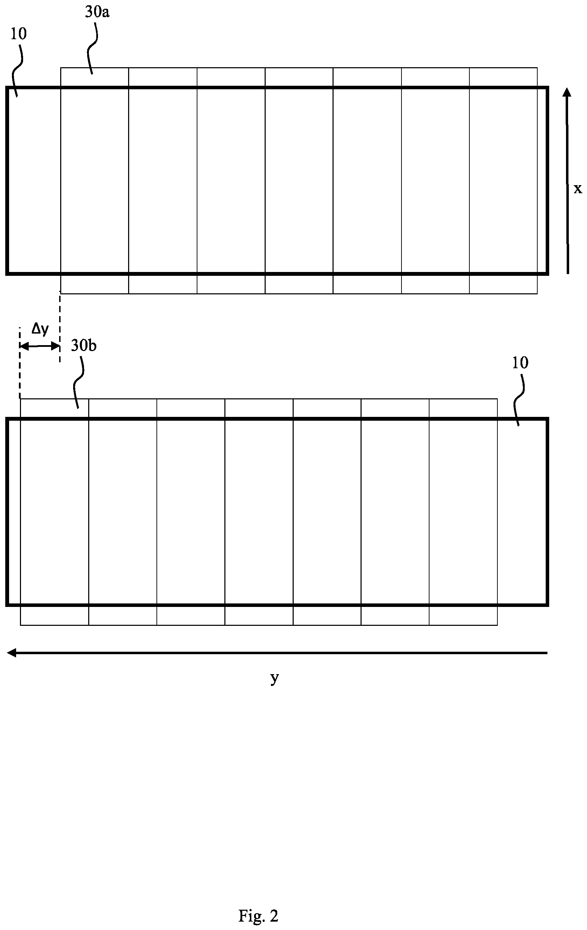

**Fig. 1** zeigt schematisch eine seitliche Ansicht einer Vorrichtung 100 zur Beobachtung und/oder Inspektion einer Materialbahn 10. Die Vorrichtung 100 kann für alle im Folgenden beschriebenen Verfahren zur Kompensation eines Materialbahnversatzes verwendet werden. Neben der Bahnbeobachtung/Inspektion kann die Vorrichtung ebenfalls zur Farbdichtemessung oder spektralen Farbmessung eingesetzt werden. Vorrichtung 100 umfasst eine Kamera 110, die mit einem Matrixchip 20 ausgestattet ist, zum Beispiel einem CCD oder CMOS Sensor. Die Kamera 110 kann für 1D, 2D und/oder 3D Aufnahmen geeignet sein sowie eine Farb- oder Schwarz-Weiß-Kamera sein. Die Kamera 110 bzw. der Sichtbereich der Kamera 110 kann entweder parallel oder traversierend bezogen auf die Richtung der Materialbahnbreite x (siehe Fig. 2) angeordnet sein. In einer nicht dargestellten Ausführungsform kann außerdem eine zusätzliche Kamera für Detailaufnahmen vorgesehen sein. **Fig. 1** zeigt außerdem unterschiedliche Einrichtungen zur Beleuchtung der Materialbahn 10. Im gezeigten Beispiel sind eine bzw. zwei Beleuchtungseinrichtung 130 oberhalb der Materialbahn 10 und eine Beleuchtungseinrichtung 150 unterhalb der Materialbahn 10 vorgesehen. Alternative Ausführungen können auch nur eine Beleuchtungseinrichtung oder mehr als zwei Beleuchtungseinrichtungen aufweisen.

Außerdem in **Fig. 1** zu sehen ist ein Objektiv 112 für die Kamera 110, das vorzugsweise eine feste Brennweite (Fixfokus) aufweist. In alternativen Ausgestaltungen kann auch ein Zoomobjektiv verwendet werden. Außerdem ist ein Sensor 140 vorgesehen, der die zurückgelegte Wegstrecke bzw. die Geschwindigkeit der Materialbahn misst. Als Sensor können hier zum Beispiel Encoder, Näherungsschalter, Druckmarkensensoren bzw. direkte Geschwindigkeitssensoren zum Einsatz kommen. Es können z.B. Drehgeber (Inkrementaldrehgeber, Drehimpulsgeber) eingesetzt werden, die meist mit einem Laufrad verwendet werden. Das Laufrad mit bekanntem Abrollumfang sitzt auf der Materialbahn auf und es werden zum Beispiel mehrere Impulse pro Umdrehung erzeugt. Durch die Anzahl der erfassten Impulse kann der zurückgelegte Weg der Materialbahn in Richtung der Materialbahnlänge y bestimmt werden. Die Materialbahngeschwindigkeit kann dann zum Beispiel über die Anzahl der erfassten Impulse pro Zeiteinheit und über den zurückgelegten Weg bestimmt, also über die Werte Zeit und Weg ermittelt werden (siehe Beispiel hierzu weiter unten). Die Materialbahn 10 wird vorzugsweise in Richtung einer Materialbahnlänge y bewegt, kann aber auch in Richtung einer Materialbahnbreite x (siehe **Fig. 2****)** bewegt werden. Die Materialbahn 10 kann zum Beispiel mit einer Bahngeschwindigkeit von mindestens 150 m/min, insbesondre mindestens 500 m/min bevorzugt mindestens 900 m/min in Richtung der Materialbahnlänge y bewegt werden.

Außerdem umfasst die Vorrichtung 100 noch eine (in **Fig. 1** nicht dargestellte) Steuereinheit, die sämtliche Aktivitäten der Vorrichtung steuert und entsprechende Signale, zum Beispiel von dem Sensor 140 oder weiteren externen Sensoren, verarbeitet. Zusätzlich können ein oder mehrere Monitore zur visuellen Anzeige der Aufnahmen der Kamera bzw. der erstellten Bildsequenzen vorgesehen sein (in **Fig. 1** nicht dargestellt).

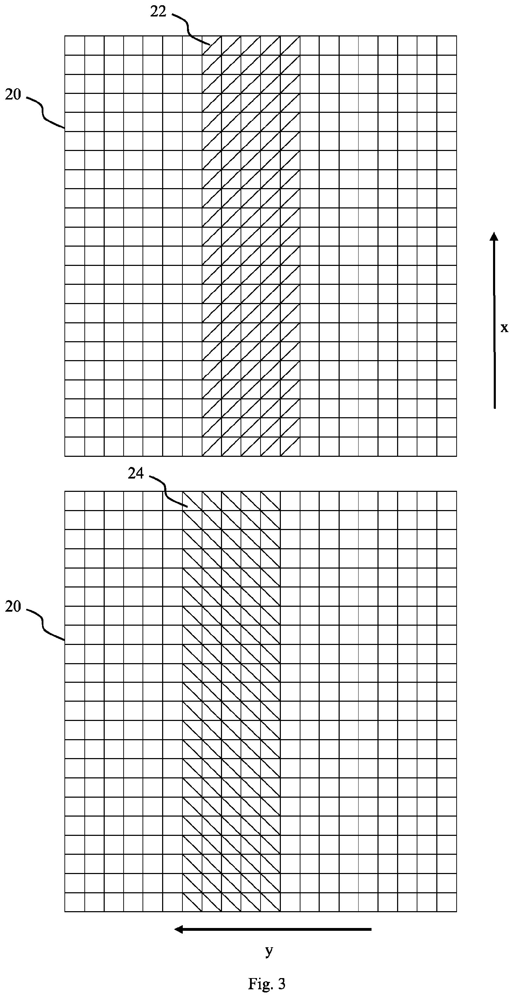

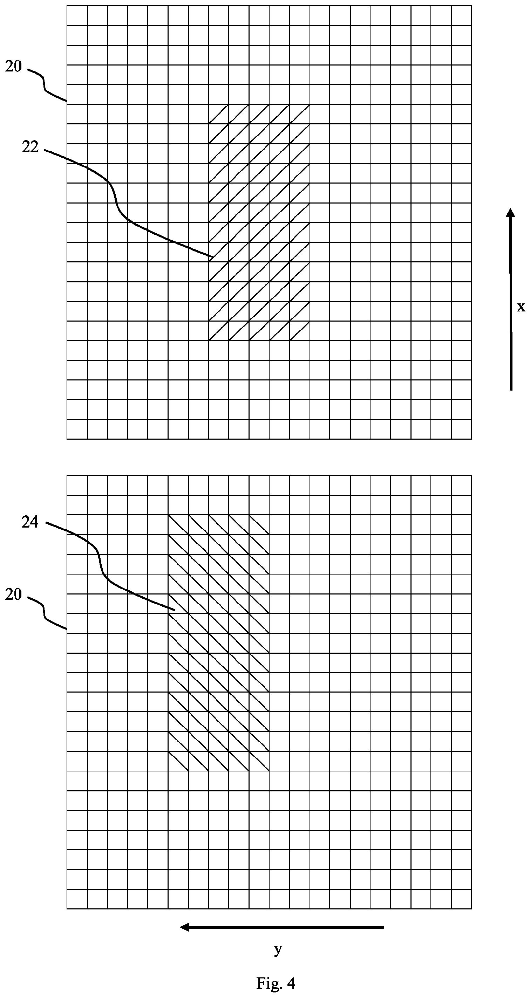

Wie eingangs erwähnt, ermöglicht es das erfindungsgemäße Verfahren einen Materialbahnversatz, der bei zwei aufeinanderfolgenden Aufnahmen entsteht, ohne aufwändige Software zur kompensieren. Dies wird durch folgende Vorgehensweise ermöglicht: Erstellen einer ersten Aufnahme eines ersten Abschnitts der Materialbahn 10 zu einem ersten Zeitpunkt mit der Kamera 110, die den Matrixchip 20 umfasst und anschließend Erstellen einer zweiten Aufnahme eines zweiten Abschnitts der Materialbahn 10 zu einem zweiten Zeitpunkt mit der Kamera 110. Das Besondere dabei ist, dass, wie in **Fig. 3** und **Fig. 4** dargestellt, für die erste Aufnahme eine erste aktive Teilfläche 22 des Matrixchips 20 verwendet wird und für die zweite Aufnahme eine zweite aktive Teilfläche 24 des Matrixchips 20 verwendet wird, wobei die erste aktive Teilfläche und die zweite aktive Teilfläche nicht identisch sind.

Der zweite Zeitpunkt kann zeitlich zum Beispiel um 0,0001 bis 0,01 Sekunden, insbesondere um 0,0005 bis 0,001 Sekunden versetzt zum ersten Zeitpunkt liegen.

Unter einer aktiven Fläche des Matrixchips 20 ist eine Teilfläche des Matrixchips 20 zu verstehen, die für die Aufnahme eines Bildes aktiviert wird. Dabei wird das Prinzip der "Region of Interest" (ROI, siehe **Fig. 1****)** verwendet, bei dem die tatsächlich aktive Fläche, also die Auflösung, eines Matrixchips 20 (wie bereits erwähnt können hier zum Beispiel CMOS Chips, CCD Chips oder Chips mit FPGA verwendet werden) angepasst wird. Das heißt, es wird nicht die komplette Chipfläche und somit nicht der maximale Sichtbereich (in **Fig. 1** ist der maximale Sichtbereich 150 der Kamera in Richtung der Materialbahnlänge y eingezeichnet), also nicht die komplette Auflösung des Chips, verwendet, sondern nur eine Teilfläche, also ein Teil der Auflösung bzw. ein Teil der verfügbaren Sensorpunkte, um eine Aufnahme zu erstellen. Die soll an einem stark vereinfacht dargestellten Beispiel erläuterte werden. So kann zum Beispiel ein Matrixchip 20 x 20 = 400 fiktive Pixel aufweisen. Zur Klarstellung sei hier nochmals erwähnt, dass es sich dabei um ein fiktives Beispiel zur Erläuterung des Prinzips der Erfindung handelt, da die tatsächlich verwendeten Matrixchips eine weitaus größere Anzahl an Pixeln aufweisen (bis zu über 100 Megapixel). Für eine erste Aufnahme kann nun zum Beispiel eine erste aktive Teilfläche 22 mit 5 X 20 = 100 fiktiven Pixeln verwendet werden, die die gesamte Breite (in x-Richtung entsprechend der Richtung der Materialbahnbreite) des Matrixchips 20 ausnutzt aber nur einen Teil seiner Länge (y-Richtung entsprechend der Richtung der Materialbahnlänge). Für eine zweite Aufnahme kann eine zweite aktive Teilfläche 24 verwendet werden, die um eine Pixelbreite (der fiktiven Pixel der Darstellung in **Fig. 3****)** in Richtung der Materialbahnlänge y verschoben ist. Bei anderen Parametern (zum Beispiel um eine höhere Bahngeschwindigkeit und/oder eine größere Zeitverschiebung (Delay) zwischen den beiden Aufnahmen zu kompensieren) kann die zweite Aufnahme um mehr als ein Pixel verschoben sein. Alternativ kann, wie in **Fig. 4** dargestellt, für die erste Aufnahme auch eine in Richtung x eingeschränkte aktive Teilfläche 22 verwendet werden und eine entsprechend in x und y Richtung verschobene zweite Teilfläche 24 für die zweite Aufnahme verwendet werden. Mit diesem Verfahren können dann entsprechende erste und zweite Bildsequenzen erstellt werden, indem fortlaufend erste und zweite Aufnahmen mit den entsprechenden Teilflächen 22, 24 erstellt und zu Bildsequenzen zusammengesetzt werden (mehr dazu unten).

Die Vorrichtung bzw. das Verfahren bringen dabei mehrere Vorteile mit sich. Die dynamische Anpassung der vom Matrixchip 20 genutzten aktiven Teilflächen 22, 24 ermöglicht eine direkte und exakte Synchronisation zweier Bildsequenzen einer Materialbahn 10 und ist unabhängig von den Eigenschaften der Materialbahn 10 (welche zum Beispiel für eine Softwarekompensation des Versatzes benötigt werden). Durch diese Regelung können zwei (oder mehrere) zu minimal unterschiedlichen Zeiten aufgenommenen Bildsequenzen direkt erfasst und exakt übereinandergelegt werden. Eine aufwändige oder zum Teil gar nicht mögliche oder zumindest nicht zufriedenstellende Kompensation eines Y-Versatzes (siehe Δy in **Fig. 2****)** bei den Aufnahmen über Softwareauswertung kann somit entfallen. Zur Verdeutlichung des Versatzes in Richtung der Materialbahnlänge y bei einer Bewegung der Materialbahn 10 in diese Richtung sind in **Fig. 2** zwei Materialbahnen 10 gezeigt, bei denen zu jeweils minimal unterschiedlichen Zeitpunkten Bahnabschnitte erfasst wurden, die zu Bildsequenzen 30a, 30b zusammengefasst werden können. Obwohl diese Bildsequenzen in Summe jeweils die gesamte Materialbahn 10 (100% Inspektion) abdecken, sind sie in Richtung der Materialbahnbewegung (in diesem Fall in Richtung y) um Δy versetzt, da sich die Materialbahn 10 zwischen zwei aufeinanderfolgenden Aufnahmen in Abhängigkeit der Materialbahngeschwindigkeit und des Delays der Kamera 110 immer ein Stück weiterbewegt hat. Folgender Versatz Δy kann beispielsweise für die folgenden Rahmenparameter entstehen:
Bahngeschwindigkeit (in Richtung y): 180 m/min ≡ 3 m/sek ≡ 3000 mm/sek
Kameraauflösung: 0,2 mm/pixel
Bildaufnahme Delay: 500 µs

Daraus ergibt sich eine Zeilenfrequenz von 15000 Zeilen/sek ≡ 15 Zeilen/Millisekunde. Bei einem Delay zwischen zwei Bildsequenzen von 500 Mikrosekunden (0,5 Millisekunden) würde das einen Versatz Δy von 7,5 Zeilen bzw. 7,5 Pixel, was 1,5 mm entspricht ergeben.

Derartige Versätze können mit der erfindungsgemäßen Vorrichtung 100 und dem erfindungsgemäßen Verfahren direkt dynamisch kompensiert werden, indem entsprechende Teilflächen 22, 24 des Matrixchips 20 aktiviert werden, so dass bei zwei aufeinanderfolgenden Aufnahmen identische Abschnitte erfasst werden können.

Ein weiterer Vorteil der Erfindung liegt darin, dass durch die Verkleinerung der aktiven Flächen 22, 24 des Matrixchips 20 die Bildaufnahmefrequenz erhöht werden kann. Dies ist insbesondere bei Multiinspektionen (also bei Inspektionen mit unterschiedlichen Beleuchtungsarten) von bewegten Objekten vorteilhaft. Durch das erfindungsgemäße Verfahren und die erfindungsgemäße Vorrichtung 100 kann also eine optimale Referenzierung (Hardwarekompensation) von mehreren Bildsequenzen erfolgen. Folglich wird eine exakte 100% Inspektion einer Materialbahn auch für Multiinspektionssysteme mit unterschiedlichen Beleuchtungsarten und ohne die Verwendung zusätzlicher Softwarekompensation zur Referenzierung ermöglicht. Dies führt zusätzlich zu einem Einsparpotential für die benötigte Rechnerleistung.

Je nach verwendeter Brennweite des Objektivs und in Abhängigkeit der verwendeten ROIs auf den Matrixchips ist es möglich, dass es zu unterschiedlichen geometrischen Verzeichnungen bezüglich der Bildaufnahme und somit zu Ungenauigkeiten kommen kann. Diese können zum Beispiel über eine Verzeichnungskalibrierung kompensiert werden.

Wie in **Fig. 3** und **Fig. 4** dargestellt, kann eine Größe und/oder eine Position der ersten und zweiten aktiven Teilflächen 22, 24 des Matrixchips 20 und dadurch der Sichtbereich der Kamera 110 in Richtung der Materialbahnlänge y und/oder in Richtung der Materialbahnbreite x dynamisch angepasst werden. Faktoren, die in die Anpassung der aktiven Teilflächen mit einfließen sind zum Beispiel die aktuelle Bahngeschwindigkeit (zum Beispiel gemessen über den Sensor 140), die aktuelle Kameraauflösung und das aktuelle Delay zwischen zwei Bildaufnahmen, wobei der Delay entweder fix vorgegeben oder ebenfalls dynamisch angepasst werden kann (siehe dazu Beispiel weiter unten). Diese Faktoren können umgehend und direkt im Matrixchip 20 durch Anpassung der aktiven Teilflächen 22, 24 berücksichtigt werden, wodurch z.B. auch dynamisch Abweichungen bei diesen Faktoren kompensiert werden können. Außerdem kann zum Beispiel ein Positionssensor vorgesehen sein, der eine Position und eine Breite der Materialbahn (in x-Richtung) bestimmt. Die Signale dieses Sensors können ebenfalls direkt in die Anpassung der aktiven Teilflächen 22, 24 einfließen.

Wie weiter oben erwähnt, kann die Vorrichtung für unterschiedliche Benutzungen verwendet werden. Zum Beispiel können der erste Abschnitt und der zweite Abschnitt zwei identische Materialbahnabschnitte sein. Das heißt, es wird derselbe Abschnitt der Materialbahn 10 zweimal aufgenommen, um zum Beispiel bei der Multiinspektion zwei unterschiedliche Beleuchtungsarten verwenden zu können. Darüber hinaus ist es auch möglich, dass mehr als zwei Beleuchtungsarten zum Einsatz kommen und eine entsprechende Anzahl an Aufnahmen gemacht wird. Alternativ können der erste Abschnitt und der zweite Abschnitt zwei unterschiedliche Materialbahnabschnitte sein. Dann werden zwei unterschiedliche Abschnitte der Materialbahn aufgenommen, allerdings auch mit unterschiedlichen aktiven Teilflächen 22, 24, um zum Beispiel eine plötzlich abweichende Bedingung bzgl. des Versatzes der Materialbahn 10 in Richtung der Materialbahnlänge y oder der Materialbahnbreite x kompensieren zu können. Dies kann zum Beispiel bei Vorrichtungen mit nur einer Beleuchtungsart verwendet werden. Hier kommt es nur zu einmaligen Kompensationen, d.h. es gibt nur eine einmalige, durch ein bestimmtes Ereignis ausgelöste Änderung für die Aufnahmen der Kamera 110 von der ersten aktiven Teilfläche 22 des Matrixchips 20 zu der zweiten aktiven Teilfläche 24 des Matrixchips 20. Ein derartiges Ereignis kann zum Beispiel ein abrupter Anstieg der Materialbahngeschwindigkeit (und somit eine Art Versatz, wie beispielsweise Versatz Δy der Materialbahn 10 in Richtung der Materialbahnlänge y aus **Fig. 2****)** oder ein Verrutschen der Materialbahn quer zur Bewegungsrichtung (Versatz der Materialbahn 10 in Richtung der Materialbahnbreite x) sein.

Wie in **Fig. 3** bzw. **Fig. 4** dargestellt, kann die zweite aktive Teilfläche 24 im Vergleich zur ersten aktiven Teilfläche 22 um einen vorgegebenen Versatz in Richtung der Materialbahnlänge y und/oder in Richtung der Materialbahnbreite x versetzt sein. Dies ist vorteilhaft, da somit sowohl ein Versatz Δy der Materialbahn 10 in y-Richtung als auch dann ein Versatz der Materialbahn 10 in x-Richtung über die Hardware ausgeglichen werden kann. Dies ist insbesondere von Vorteil, falls zum Beispiel die Materialbahnkanten für einen Versatz in x-Richtung (bezüglich einer möglichen Softwarekompensation) nicht erfasst werden können bzw. der Sichtbereich der Kamera 110 an den tatsächlichen Nutzen der Materialbahn 10 angepasst wird. Eine weitere Erhöhung der Bildaufnahmefrequenz wird ermöglicht, wenn sowohl in x- als auch in y-Richtung eingeschränkte Teilflächen des Matrixchips 20 aktiviert werden. Mit Hilfe des oben erwähnten Positionssensors kann es außerdem ermöglicht werden, dass der Sichtbereich in x-Richtung an die Materialbahnbreite angepasst wird, ohne die Materialbahnkanten berücksichtigen zu müssen.

Die erste Aufnahme kann Teil einer ersten Bildsequenz der Materialbahn 10 und die zweite Aufnahme Teil einer zweiten Bildsequenz der Materialbahn 10 sein. Die erste Bildsequenz der Materialbahn 10 wird dabei aus einer Vielzahl an ersten Aufnahmen erstellt und die zweite Bildsequenz aus einer Vielzahl an zweiten Aufnahmen. Es kann vorgesehen sein, dass alle Aufnahmen der ersten Bildsequenz mit der ersten aktiven Teilfläche 22 des Matrixchips 20 und alle Aufnahmen der zweiten Bildsequenz mit der zweiten aktiven Teilfläche 24 des Matrixchips 20 aufgenommen werden. Ebenfalls möglich ist, dass die zweiten aktiven Teilflächen 24 des Matrixchips für die Aufnahmen der zweiten Bildsequenz jeweils angepasst werden. Dabei können beispielsweise Faktoren wie die aktuelle Bahngeschwindigkeit, die aktuelle Kameraauflösung und das aktuelle Delay zwischen zwei Bildaufnahmen berücksichtigt werden.

Wie in **Fig. 1** gezeigt, weist die Vorrichtung unterschiedliche Beleuchtungseinrichtungen auf. Die Materialbahn 10 kann für die ersten und zweiten Aufnahmen mit der gleichen ersten Beleuchtungsart (zum Beispiel mit Beleuchtungseinrichtung 130) beleuchtet werden. Alternativ kann für die erste Aufnahme die Materialbahn 10 mit einer ersten Beleuchtungsart (zum Beispiel mit Beleuchtungseinrichtung 130) beleuchtet werden und für die zweite Aufnahme die Materialbahn 10 mit einer zweiten Beleuchtungsart (zum Beispiel mit Beleuchtungseinrichtung 120) beleuchtet werden. Bezogen auf die Multiinspektion kann nun von einer Vielzahl von in Richtung der Materialbahnlänge y aufeinanderfolgenden Abschnitten der Materialbahn 10 jeweils eine erste Aufnahme mit der ersten Beleuchtungsart und jeweils eine zweite Aufnahme mit der zweiten Beleuchtungsart erstellt werden, wobei die ersten Aufnahmen zusammen die erste Bildsequenz der Materialbahn 10 ergeben und die zweiten Aufnahmen die zweite Bildsequenz der Materialbahn 10 ergeben. Die so generierten Bildsequenzen können dann zum Beispiel für einen Benutzer visuell an einem oder mehreren Monitoren angezeigt werden. Zum Beispiel kann in einer Bildsequenz für die Inspektion auch gleichzeitig die Bahnbeobachtung durch einen Benutzer erfolgen. Alternativ kann die Bahnbeobachtung aber auch über eine eigene Bildsequenz erfolgen.

Entsprechend der verwendeten Beleuchtungseinrichtungen 120, 130, kann die Materialbahn 10 für die erste und/oder die zweite Aufnahme im gesamten Sichtbereich 150 der Kamera 110 beleuchtet oder alternativ jeweils selektiv entsprechend der ersten und zweiten aktiven Teilflächen 22, 24 des Matrixchips beleuchtet werden. Außerdem ist es möglich, dass die Beleuchtung der Materialbahn 10, bezogen auf die Richtung der Materialbahnbreite x, traversierend erfolgt.

Neben einer Multiinspektion mit zwei Bildsequenzen kann die Vorrichtung auch für eine Multiinspektion mit drei oder mehr Bildsequenzen verwendet werden. Dafür werden dann weitere Aufnahmen entsprechender weiterer Abschnitte zu entsprechenden weiteren Zeitpunkten unter Verwendung entsprechender weiterer aktiver Teilflächen des Matrixchips 20 erstellt, wobei die weiteren Abschnitte mit dem ersten Abschnitt und/oder dem zweiten Abschnitt identisch sind. Für diese weiteren Aufnahmen können weitere Beleuchtungsarten zur Beleuchtung der Materialbahn 10 verwendet werden. Selbstverständlich können neben den gezeigten Beleuchtungseinrichtungen 120, 130 weitere Beleuchtungseinrichtungen vorgesehen sein. Die Beleuchtungsarten können zum Beispiel ausgewählt werden aus der Gruppe bestehend aus Auflichtbeleuchtungen, Hintergrundbeleuchtungen und Durchlichtbeleuchtungen. Dabei können ein Reihe an Beleuchtungseigenschaften realisiert werden: homogene oder inhomogene Beleuchtung, direkte, diffuse, fokussierte oder kollimierte Beleuchtung, koaxiale, transmissive und/oder polarisierte Beleuchtung, unterschiedliche Beleuchtungswinkel und Hellfeld- oder Dunkelfeldbeleuchtung, Lichtwellenlängen im UV, sichtbaren oder IR Bereich (um z.B. auch Sicherheitsmerkmale inspizieren zu können), einfarbige (monochrom), mehrfarbige (polychrom) oder farblich abstimmbar bzw. steuerbare (RGB-) Beleuchtung, Flächenbeleuchtung oder Zeilenbeleuchtung, konstante oder geblitzte Beleuchtung, bei Auflicht- und Durchlichtbeleuchtung können diese alternierend oder gleichzeitig zum Einsatz kommen. Die Beleuchtungseinrichtungen können als Tunnelbeleuchtungssystem, Tube-Beleuchtungssystem oder Dome-Beleuchtungssystem ausgestaltet sein, sowie modular bzw. an die Materialbahnbreite angepasst sein. Als Leuchtmittel können dabei zum Beispiel Glühlampen, Gasentladungslampen, LED-Beleuchtung, OLED-Beleuchtung oder Laser-Beleuchtung zum Einsatz kommen. Die jeweiligen Beleuchtungsarten und Eigenschaften können zum Beispiel für die folgende Multiinspektion eingesetzt werden: Druckbildinspektion mit sichtbarem Auflicht, Etiketteninspektion mit sichtbarem Durchlicht und Inspektion von UV Sicherheitsmerkmalen mit UV Auflicht.

Der Sichtbereich der Kamera 110 kann ausgelegt sein, um zumindest die gesamte Materialbahnbreite abzudecken. Wie schon weiter oben beschrieben kann insbesondere der Sichtbereich der Kamera 110 in Richtung der Materialbahnbreite x größer sein als die Materialbahnbreite. Basierend auf einem Signal des Materialbahn-Positionssensors (in **Fig. 1** nicht dargestellt) können die ersten und zweiten aktiven Teilflächen 22, 24 eingestellt werden, insbesondere eine Größe und/oder eine Position der ersten und zweiten aktiven Teilflächen 22, 24 in Richtung der Materialbahnbreite x. Neben der Position der Materialbahn 10 können zusätzlich wiederum die folgenden Faktoren bei der Anpassung der aktiven Teilflächen 22, 24 eine Rolle spielen: die aktuelle Bahngeschwindigkeit, die aktuelle Kameraauflösung und das aktuelle Delay zwischen zwei Bildaufnahmen.

Der Delay, also die zeitliche Verschiebung zwischen der ersten und der zweiten Aufnahme, kann entweder fest vorgegeben sein oder entsprechend der Materialbahnbewegung angepasst werden. Dabei ist der Delay abhängig von einem ersten Trigger der die erste Aufnahme (zum ersten Zeitpunkt) auslöst und einem zweiten Trigger, der die zweite Aufnahme (zu einem zweiten Zeitpunkt) auslöst. Durch den Delay zwischen dem ersten Trigger und dem zweiten Trigger entsteht der Materialbahnversatz Δy (siehe **Fig. 2**). Wie schon erwähnt kann ein zeitlicher Abstand zwischen diesen beiden Triggern (also den beiden Aufnahmen) fest vorgegeben sein und ist z.B. durch eine maximale Bildaufnahmefrequenz der Kamera 110 nach unten beschränkt. Die ersten und zweiten Zeitpunkte für die beiden Trigger, also der Delay, können aber auch dynamisch angepasst werden. Dabei kann der weiter oben erwähnte Sensor 140 zum Messen der zurückgelegten Wegstrecke bzw. der Geschwindigkeit der Materialbahn 10 zum Einsatz kommen. Dies soll im Folgenden anhand eines einfachen Zahlenbeispiels für einen Sensor mit Laufrad beschrieben werden. Die Informationen für die Steuerung der Trigger kommen z.B. von einem Encoder. Dieser Encoder ist mit dem Laufrad gekoppelt und gibt eine gewisse Anzahl an Impulsen, z.B. 2048, pro Umdrehung des Laufrads ab. Wenn das Laufrad beispielsweise einen Durchmesser von 100 mm aufweist, dann ergibt sich ein Abrollumfang von 100 mm * π = 314,16 mm und eine zurückgelegte Wegstrecke der Materialbahn in Richtung der Materialbahnlänge y von 314,16 mm / 2048 Impulse pro Umdrehung, was ungefähr 0,15 mm pro Impuls entspricht. Bei Verwendung eines Sensors mit zum Beispiel einer Auflösung von 1600 x 1200 Pixel und einer Breite der Materialbahn in Richtung x von 350 mm ergeben sich 350 mm / 1600 Pixel = 0,22 mm pro Pixel in x-Richtung (bei Abdeckung der gesamten Materialbahnbreite) und, da ein Matrixchip verwendet wird, auch 0,22 mm pro Pixel in y-Richtung. Angenommen der Versatz Δy entspricht 132 mm und unter Verwendung der oben beschriebenen Laufrad/Encoder Kombination kommt man auf 132 mm / 0,15 mm pro Impuls = 880 Impulse des Encoders. Das heißt, zwischen dem Auslösen des ersten Triggers für die erste Aufnahme und dem Auslösen des zweiten Triggers für die zweite Aufnahme wurden 880 Impulse des Encoders erfasst. Somit wird die zweite Aufnahme mit einem Versatz von Δy = 132 mm erstellt. Da die 132 mm Versatz Δy bei dem Matrixchip-Beispiel 600 Pixeln entsprechen, muss also die ROI für die zweite Aufnahme um 600 Pixel in Richtung der Materialbahnlänge y versetzt werden, um den gleichen Materialbahnabschnitt (mit einer anderen Beleuchtung) aufzunehmen. Über die Anzahl der Impulse kann also der Korrekturwert für die ROI bestimmt werden. Der erste Zeitpunkt für den ersten Trigger bzw. die erste Aufnahme sowie der zweite Zeitpunkt für den zweiten Trigger bzw. die zweite Aufnahme können also über die Wegstrecke des Laufrads und die Impulse des Encoders bestimmt werden. So können zum Beispiel die erste Aufnahme nach einer ersten Anzahl an Impulsen und die zweite Aufnahme nach einer zweiten Anzahl an Impulsen erfolgen. Im fortlaufenden Betrieb ist die Anzahl an Impulsen dabei meist konstant, da ja die Materialbahnabschnitte in Summe jeweils 100% der Materialbahn abdecken sollen. Durch die Änderung der Materialbahngeschwindigkeit ändert sich dann nur die Zeit zwischen den ersten Aufnahmen und den zweiten Aufnahmen aber nicht die Anzahl der Impulse zwischen den ersten Aufnahmen und den zweiten Aufnahmen. Das heißt, der von der Materialbahn zurückgelegte Weg bleibt gleich, aber die Zeitverschiebung zwischen den Aufnahmen ändert sich bzw. wird angepasst. Das bedeutet, dass mit einem Sensor der den Weg messen kann (Laufrad mit Encoder) eine entsprechende Triggerung für die ersten und zweiten Aufnahmen sowie eine Korrektur der ROI stattfinden kann.

Mit dieser Vorgehensweise können aber auch zum Beispiel unterschiedliche Materialbahngeschwindigkeiten ausgeglichen werden, da die Triggerung ja nur von der vorbestimmten Anzahl an Impulsen abhängt, die wiederrum je nach Bahngeschwindigkeit zu einem früheren oder späteren Zeitpunkt erreicht werden. Das heißt, durch den Sensor 140 können zum Beispiel unterschiedliche Materialbahngeschwindigkeiten beim Anfahren, Stoppen bzw. auch innerhalb eines Arbeitsprozesses berücksichtigt werden und dadurch die (Zeitpunkte der) ersten und zweiten Aufnahmen der Kamera 110 entsprechend angepasst werden. Die Anzahl an Impulsen, die jeweils abgewartet wird, kann zum Beispiel in Abhängigkeit der Eigenschaften und der Auflösung des verwendeten Matrixsensors 20 bestimmt werden.

Für die Triggerung kann zum Beispiel die oben erwähnte Steuereinheit oder ein Steuergerät eingesetzt werden, das hierfür Informationen von dem Sensor 140 erhält, um ein Triggersignal für die ersten Aufnahmen und die zweiten Aufnahmen an die Kamera 110 zu senden. Die Steuereinheit oder das Steuergerät können als externes Gerät vorgesehen sein. Es ist aber auch möglich, dass ein derartiges Gerät bzw. eine Steuerungslogik direkt in der Kamera 110 verbaut ist. Somit kann zum Beispiel der Sensor 140 direkt an dem Steuergerät oder an der Kamera 110 angeschlossen sein.

Neben der in **Fig. 1** gezeigten Ausführung mit einer Kamera 110 ist es auch möglich die Vorrichtung 100 mit einer Mehrzahl an Kameras mit Matrixchip 20 auszustatten, wobei die Kameras dann über die Materialbahnbreite verteilt angeordnet sind, so dass die Sichtbereiche der Kameras in Richtung der Materialbahnbreite x aneinander angrenzen oder überlappen. Die Mehrzahl an Kameras erstellt dann entsprechende erste und zweite Aufnahmen, wobei die ersten und zweiten Aufnahmen zu zwei zusammenhängenden Bildsequenzen zusammengesetzt werden. Falls mehrere Kameras zum Einsatz kommen, können diese bezogen auf die Richtung der Materialbahnbreite x traversierend angeordnet sein. Außerdem können mechanische Versätze der Kameras in Richtung der Materialbahnlänge y zueinander durch eine entsprechende Auswahl aktiver Teilflächen der Matrixchips 20 ausgeglichen werden.

Es kann außerdem auch vorgesehen sein, dass mindestens eine Kamera 110 auf einer Vorderseite der Materialbahn 10 und mindestens eine Kamera auf einer Rückseite der Materialbahn 10 angeordnet ist, die jeweils erste und zweite Aufnahmen der Vorderseite und der Rückseite der Materialbahn 10 erstellen. Dies ermöglicht die Beobachtung bzw. Inspektion beider Materialbahnseiten.

## Patentansprüche

1. Verfahren zur Kompensation eines Materialbahnversatzes bei Inspektionssystemen für Materialbahnen, die sich in Richtung einer Materialbahnlänge (y) und/oder einer Materialbahnbreite (x) bewegen, wobei das Verfahren die folgenden Schritte umfasst:
Erstellen einer ersten Aufnahme eines ersten Abschnitts einer Materialbahn (10) zu einem ersten Zeitpunkt mit einer Kamera (110), die einen Matrixchip (20) umfasst; und
Erstellen einer zweiten Aufnahme eines zweiten Abschnitts der Materialbahn (10) zu einem zweiten Zeitpunkt mit der Kamera (110);
wobei für die erste Aufnahme ausschließlich eine erste aktive Teilfläche (22) des Matrixchips (20) zu dem ersten Zeitpunkt aktiviert wird und für die zweite Aufnahme ausschließlich eine zweite aktive Teilfläche (24) des Matrixchips (20) zu dem zweiten Zeitpunkt aktiviert wird, wobei die erste aktive Teilfläche und die zweite aktive Teilfläche nicht identisch sind;
wobei die zweite aktive Teilfläche (24) im Vergleich zur ersten aktiven Teilfläche (22) um einen vorgegebenen Versatz in Richtung der Materialbahnlänge (y) und/oder in Richtung der Materialbahnbreite (x) versetzt ist; und
wobei eine zeitliche Verschiebung zwischen der ersten und der zweiten Aufnahme entweder fest vorgegeben ist oder entsprechend der Materialbahnbewegung angepasst wird und abhängig ist von einem ersten Trigger, der die erste Aufnahme zu dem ersten Zeitpunkt auslöst, und einem zweiten Trigger, der die zweite Aufnahme zu dem zweiten Zeitpunkt auslöst.

2. Verfahren gemäß Anspruch 1, **dadurch gekennzeichnet, dass** eine Größe und/oder eine Position der ersten und zweiten aktiven Teilflächen (22, 24) des Matrixchips (20) und dadurch der Sichtbereich der Kamera (110) in Richtung der Materialbahnlänge (y) und/oder in Richtung der Materialbahnbreite (x) dynamisch angepasst werden können.

3. Verfahren gemäß Anspruch 1 oder Anspruch 2, **dadurch gekennzeichnet, dass** der erste Abschnitt und der zweite Abschnitt zwei identische Materialbahnabschnitte sind; oder dadurch, dass der erste Abschnitt und der zweite Abschnitt zwei unterschiedliche Materialbahnabschnitte sind.

4. Verfahren gemäß irgendeinem der vorangehenden Ansprüche, **dadurch gekennzeichnet, dass** die erste Aufnahme Teil einer ersten Bildsequenz der Materialbahn (10) und die zweite Aufnahme Teil einer zweiten Bildsequenz der Materialbahn (10) ist, insbesondere wobei eine erste Sequenz mit einer Vielzahl an ersten Aufnahmen erstellt wird, um die erste Bildsequenz der Materialbahn (10) zu erzeugen und eine zweite Sequenz mit einer Vielzahl an zweiten Aufnahmen erstellt wird, um die zweite Bildsequenz der Materialbahn (10) zu erzeugen.

5. Verfahren gemäß irgendeinem der vorangehenden Ansprüche, **dadurch gekennzeichnet, dass** die Materialbahn (10) für die ersten und zweiten Aufnahmen mit einer ersten Beleuchtungsart beleuchtet wird; oder dadurch, dass
für die erste Aufnahme die Materialbahn (10) mit einer ersten Beleuchtungsart beleuchtet wird und für die zweite Aufnahme die Materialbahn (10) mit einer zweiten Beleuchtungsart beleuchtet wird.

6. Verfahren gemäß Anspruch 5, **gekennzeichnet durch** das Erstellen weiterer Aufnahmen entsprechender weiterer Abschnitte zu entsprechenden weiteren Zeitpunkten unter Verwendung entsprechender weiterer aktiver Teilflächen des Matrixchips, wobei die weiteren Abschnitte mit dem ersten Abschnitt und/oder dem zweiten Abschnitt identisch sind, und optional, wobei für die weiteren Aufnahmen weitere Beleuchtungsarten zur Beleuchtung der Materialbahn (10) verwendet werden.

7. Verfahren gemäß irgendeinem der vorangehenden Ansprüche, **dadurch gekennzeichnet, dass** ein Sichtbereich der Kamera (110) ausgelegt ist, um zumindest die gesamte Materialbahnbreite abzudecken, insbesondere wobei der Sichtbereich der Kamera (110) in Richtung der Materialbahnbreite (x) größer ist als die Materialbahnbreite; optional wobei basierend auf einem Signal eines Materialbahn-Positionssensors die ersten und zweiten aktiven Teilflächen (22, 24) eingestellt werden, insbesondere eine Größe und/oder eine Position der ersten und zweiten aktiven Teilflächen (22, 24) in Richtung der Materialbahnbreite (x) eingestellt wird.

8. Vorrichtung zur Beobachtung und/oder Inspektion von Materialbahnen, die sich in Richtung einer Materialbahnlänge (y) und/oder einer Materialbahnbreite (x) bewegen, umfassend:
eine Kamera (110), die einen Matrixchip (20) umfasst, wobei Teilflächen des Matrixchips (20) unabhängig voneinander aktiviert werden können; und
eine Steuereinheit;
wobei die Steuereinheit ausgelegt ist zu veranlassen, dass
ausschließlich eine erste Teilfläche (22) des Matrixchips (20) aktiviert wird, um eine erste Aufnahme eines ersten Abschnitts der Materialbahn (10) zu einem ersten Zeitpunkt zu erstellen;
ausschließlich eine zweite Teilfläche (24) des Matrixchips (20) aktiviert wird, um eine zweite Aufnahme eines zweiten Abschnitts der Materialbahn (10) zu einem zweiten Zeitpunkt zu erstellen;
wobei die erste aktive Teilfläche (22) und die zweite aktive Teilfläche (24) nicht identisch sind;
wobei die Steuereinheit ausgelegt ist, die ersten und zweiten aktiven Teilflächen (22, 24) so auszuwählen, dass die zweite aktive Teilfläche (24) im Vergleich zur ersten aktiven Teilfläche (22) um einen vorgegebenen Versatz in Richtung der Materialbahnlänge (y) und/oder in Richtung der Materialbahnbreite (x) versetzt ist; und
wobei eine zeitliche Verschiebung zwischen der ersten und der zweiten Aufnahme entweder fest vorgegeben ist oder entsprechend der Materialbahnbewegung angepasst wird und abhängig ist von einem ersten Trigger, der die erste Aufnahme zu dem ersten Zeitpunkt auslöst, und einem zweiten Trigger, der die zweite Aufnahme zu dem zweiten Zeitpunkt auslöst.

9. Vorrichtung gemäß Anspruch 8, **dadurch gekennzeichnet, dass** eine Größe und/oder eine Position der ersten und zweiten aktiven Teilflächen (22, 24) des Matrixchips (20) und dadurch der Sichtbereich der Kamera (110) in Richtung der Materialbahnlänge (y) und/oder in Richtung der Materialbahnbreite (x) dynamisch angepasst werden kann.

10. Vorrichtung gemäß Anspruch 8 oder Anspruch 9, **dadurch gekennzeichnet, dass** der erste Abschnitt und der zweite Abschnitt zwei identische Materialbahnabschnitte sind; oder dadurch, dass der erste Abschnitt und der zweite Abschnitt zwei unterschiedliche Materialbahnabschnitte sind.

11. Vorrichtung gemäß irgendeinem der Ansprüche 8 bis 10, **dadurch gekennzeichnet, dass** die Vorrichtung (100) eine erste Beleuchtungseinrichtung (120, 130) aufweist, so dass die Materialbahn (10) für die ersten und zweiten Aufnahmen mit einer ersten Beleuchtungsart beleuchtet werden kann; oder dadurch, dass
die Vorrichtung (100) erste und zweite Beleuchtungseinrichtungen (120, 130) aufweist, so dass für die erste Aufnahme der Materialbahn (10) eine erste Beleuchtungsart verwendet werden kann und für die zweite Aufnahme der Materialbahn (10) eine zweite Beleuchtungsart verwendet werden kann.

12. Vorrichtung gemäß Anspruch 11, **dadurch gekennzeichnet, dass** die Steuereinheit ausgelegt ist zu veranlassen, dass von einer Vielzahl von in Richtung der Materialbahnlänge (y) aufeinanderfolgenden Abschnitten der Materialbahn (10) jeweils eine erste Aufnahme mit der ersten Beleuchtungsart und jeweils eine zweite Aufnahme mit der zweiten Beleuchtungsart erstellt werden, wobei die ersten Aufnahmen zusammen eine erste Bildsequenz der Materialbahn (10) ergeben und die zweiten Aufnahmen eine zweite Bildsequenz der Materialbahn (10) ergeben.

13. Vorrichtung gemäß Anspruch 11 oder Anspruch 12, **dadurch gekennzeichnet, dass** die Steuereinheit ausgelegt ist zu veranlassen, dass weitere Teilflächen des Matrixchips (20) aktiviert werden, um weitere Aufnahmen entsprechender weiterer Abschnitte zu entsprechenden weiteren Zeitpunkten zu erstellen, wobei die weiteren Abschnitte mit dem ersten Abschnitt und/oder dem zweiten Abschnitt identisch ist, und optional, wobei die Vorrichtung weitere Beleuchtungseinrichtungen umfasst, so dass für die weiteren Aufnahmen die Materialbahn (10) mit weiteren Beleuchtungsarten beleuchtet werden kann.

14. Vorrichtung gemäß irgendeinem der Ansprüche 8 bis 13, **dadurch gekennzeichnet, dass** eine Mehrzahl an Kameras mit Matrixchip (20) vorgesehen ist, wobei die Kameras verteilt über die Materialbahnbreite angeordnet sind, so dass die Sichtbereiche der Mehrzahl an Kameras in Richtung der Materialbahnbreite (x) aneinander angrenzen oder überlappen, wobei die Steuereinheit ausgelegt ist zu veranlassen, dass die Mehrzahl an Kameras entsprechende erste und zweite Aufnahmen erstellt und die ersten und zweiten Aufnahmen zu zwei zusammenhängenden Bildsequenzen zusammengesetzt werden.

15. Vorrichtung gemäß irgendeinem der Ansprüche 8 bis 14, **dadurch gekennzeichnet, dass** mindestens eine Kamera (110) auf einer Vorderseite der Materialbahn (10) und mindestens eine Kamera auf einer Rückseite der Materialbahn (10) vorgesehen ist, wobei die Steuereinheit ausgelegt ist zu veranlassen, dass jeweils erste und zweite Aufnahmen der Vorderseite und der Rückseite der Materialbahn (10) erstellt werden.

## Claims

1. Method for compensating for a material web offset in inspection systems for material webs which are moving in the direction of a material web length (y) and/or a material web width (x), wherein the method comprises the following steps:
taking a first picture of a first portion of a material web (10) at a first point in time with a camera (110) which comprises a matrix chip (20); and
taking a second picture of a second portion of the material web (10) at a second point in time with the camera (110);
wherein just a first active partial surface (22) of the matrix chip (20) is activated at the first point in time for the first picture and just a second active partial surface (24) of the matrix chip (20) is activated at the second point in time for the second picture, wherein the first active partial surface and the second active partial surface are not identical;
wherein the second active partial surface (24) is offset in comparison with the first active partial surface (22) by a prescribed offset in the direction of the material web length (y) and/or in the direction of the material web width (x); and
wherein a time lag between the first and the second picture is either prescribed as a fixed amount of time or adjusted according to the material web movement and is dependent on a first trigger, which triggers the first picture at the first point in time, and a second trigger, which triggers the second picture at the second point in time.

2. Method according to Claim 1, **characterized in that** a size and/or a position of the first and second active partial surfaces (22, 24) of the matrix chip (20) and thereby the field of view of the camera (110) in the direction of the material web length (y) and/or in the direction of the material web width (x) can be dynamically adjusted.

3. Method according to Claim 1 or Claim 2, **characterized in that** the first portion and the second portion are two identical material web portions; or **in that** the first portion and the second portion are two different material web portions.

4. Method according to any one of the preceding claims, **characterized in that** the first picture is part of a first sequence of pictures of the material web (10) and the second picture is part of a second sequence of pictures of the material web (10), in particular wherein a first sequence is created with a plurality of first pictures in order to produce the first sequence of pictures of the material web (10) and a second sequence is created with a plurality of second pictures in order to produce the second sequence of pictures of the material web (10).

5. Method according to any one of the preceding claims, **characterized in that** the material web (10) is illuminated with a first type of lighting for the first and second pictures; or
**in that**
the material web (10) is illuminated with a first type of lighting for the first picture and the material web (10) is illuminated with a second type of lighting for the second picture.

6. Method according to Claim 5, **characterized by** the taking of further pictures of corresponding further portions at corresponding further points in time using corresponding further active partial surfaces of the matrix chip, wherein the further portions are identical to the first portion and/or the second portion, and optionally wherein further types of lighting are used for illuminating the material web (10) for the further pictures.

7. Method according to any one of the preceding claims, **characterized in that** a field of view of the camera (110) is designed to cover at least the entire width of the material web, in particular wherein the field of view of the camera (110) in the direction of the material web width (x) is greater than the material web width; optionally wherein the first and second active partial surfaces (22, 24) are set on the basis of a signal from a material web position sensor, in particular a size and/or a position of the first and second active partial surfaces (22, 24) in the direction of the material web width (x) is set.

8. Device for observing and/or inspecting material webs which are moving in the direction of a material web length (y) and/or a material web width (x), comprising:
a camera (110) which comprises a matrix chip (20), wherein partial surfaces of the matrix chip (20) can be activated independently of one another; and
a control unit;
wherein the control unit is designed to cause
just a first partial surface (22) of the matrix chip (20) to be activated in order to take a first picture of a first portion of the material web (10) at a first point in time;
just a second partial surface (24) of the matrix chip (20) to be activated in order to take a second picture of a second portion of the material web (10) at a second point in time;
wherein the first active partial surface (22) and the second active partial surface (24) are not identical;
wherein the control unit is designed to select the first and second active partial surfaces (22, 24) such that the second active partial surface (24) is offset in comparison with the first active partial surface (22) by a prescribed offset in the direction of the material web length (y) and/or in the direction of the material web width (x); and
wherein a time lag between the first and the second picture is either prescribed as a fixed amount of time or adjusted according to the material web movement and is dependent on a first trigger, which triggers the first picture at the first point in time, and a second trigger, which triggers the second picture at the second point in time.

9. Device according to Claim 8, **characterized in that** a size and/or a position of the first and second active partial surfaces (22, 24) of the matrix chip (20) and thereby the field of view of the camera (110) in the direction of the material web length (y) and/or in the direction of the material web width (x) can be dynamically adjusted.

10. Device according to Claim 8 or Claim 9, **characterized in that** the first portion and the second portion are two identical material web portions; or **in that** the first portion and the second portion are two different material web portions.

11. Device according to any one of Claims 8 to 10, **characterized in that** the device (100) has a first lighting device (120, 130), so that the material web (10) can be illuminated with a first type of lighting for the first and second pictures; or **in that**
the device (100) has first and second lighting devices (120, 130), so that a first type of lighting can be used for the first picture of the material web (10) and a second type of lighting can be used for the second picture of the material web (10).

12. Device according to Claim 11, **characterized in that** the control unit is designed to cause a first picture to be respectively taken with the first type of lighting and a second picture to be respectively taken with the second type of lighting of a plurality of portions of the material web (10) following one another in the direction of the material web length (y), wherein the first pictures together produce a first sequence of pictures of the material web (10) and the second pictures produce a second sequence of pictures of the material web (10).

13. Device according to Claim 11 or Claim 12, **characterized in that** the control unit is designed to cause further partial surfaces of the matrix chip (20) to be activated in order to take further pictures of corresponding further portions at corresponding further points in time, wherein the further portions are identical to the first portion and/or the second portion, and optionally wherein the device comprises further lighting devices, so that the material web (10) can be illuminated with further types of lighting for the further pictures.

14. Device according to any one of Claims 8 to 13, **characterized in that** a plurality of cameras with a matrix chip (20) are provided, wherein the cameras are arranged distributed over the material web width, so that the fields of view of the plurality of cameras in the direction of the material web width (x) adjoin one another or overlap, wherein the control unit is designed to cause the plurality of cameras to take corresponding first and second pictures and the first and second pictures to be combined to form two contiguous sequences of pictures.

15. Device according to any one of Claims 8 to 14, **characterized in that** at least one camera (110) is provided on a front side of the material web (10) and at least one camera is provided on a rear side of the material web (10), wherein the control unit is designed to cause first and second pictures to be respectively taken of the front side and the rear side of the material web (10).

## Revendications

1. Procédé de compensation d'un décalage de bande de matériau dans des systèmes d'inspection pour des bandes de matériau qui se déplacent dans la direction d'une longueur de bande de matériau (y) et/ou d'une largeur de bande de matériau (x), le procédé comprenant les étapes suivantes :
réalisation d'une première prise de vue d'une première portion d'une bande de matériau (10) à un premier instant avec une caméra (110), laquelle comporte une puce matricielle (20) ; et
réalisation d'une deuxième prise de vue d'une deuxième portion de la bande de matériau (10) à un deuxième moment avec la caméra (110) ;
exclusivement une première surface partielle active (22) de la puce matricielle (20) étant activée au premier instant pour la première prise de vue et exclusivement une deuxième surface partielle active (24) de la puce matricielle (20) étant activée au deuxième instant pour la deuxième prise de vue, la première surface partielle active et la deuxième surface partielle active n'étant pas identiques ;
la deuxième surface partielle active (24) étant décalée par rapport à la première surface partielle active (22) d'un décalage prédéfini dans la direction de la longueur de la bande de matériau (y) et/ou dans la direction de la largeur de la bande de matériau (x) ; et
un décalage temporel entre la première et la deuxième prise de vue étant soit prédéfini de manière fixe, soit adapté en fonction du mouvement de la bande de matériau et étant dépendant d'un premier déclencheur, qui déclenche la première prise de vue au premier instant, et d'un deuxième déclencheur, qui déclenche la deuxième prise de vue au deuxième instant.

2. Procédé selon la revendication 1, **caractérisé en ce qu'**une taille et/ou une position des première et deuxième surfaces partielles actives (22, 24) de la puce matricielle (20) et ainsi le champ de vision de la caméra (110) peuvent être adaptés de manière dynamique dans la direction de la longueur de la bande de matériau (y) et/ou dans la direction de la largeur de la bande de matériau (x).

3. Procédé selon la revendication 1 ou la revendication 2, **caractérisé en ce que** la première portion et la deuxième portion sont deux portions de bande de matériau identiques ; ou **en ce que** la première portion et la deuxième portion sont deux portions de bande de matériau différentes.

4. Procédé selon l'une quelconque des revendications précédentes, **caractérisé en ce que** la première prise de vue fait partie d'une première séquence d'images de la bande de matériau (10) et la deuxième prise de vue fait partie d'une deuxième séquence d'images de la bande de matériau (10), une première séquence qui comprend une pluralité de premières prises de vue étant notamment réalisée en vue de générer la première séquence d'images de la bande de matériau (10) et une deuxième séquence qui comprend une pluralité de deuxièmes prises de vue étant notamment réalisée en vue de générer la deuxième séquence d'images de la bande de matériau (10).

5. Procédé selon l'une quelconque des revendications précédentes, **caractérisé en ce que** la bande de matériau (10) est éclairée avec un premier type d'éclairage pour les première et deuxième prises de vue ; ou
**en ce que**
pour la première prise de vue, la bande de matériau (10) est éclairée avec un premier type d'éclairage et pour la deuxième prise de vue, la bande de matériau (10) est éclairée avec un deuxième type d'éclairage.

6. Procédé selon la revendication 5, **caractérisé par** la réalisation de prises de vue supplémentaires de portions supplémentaires correspondantes à des instants supplémentaires correspondants en utilisant des sous-surfaces actives supplémentaires correspondantes de la puce matricielle, les portions supplémentaires étant identiques à la première portion et/ou à la deuxième portion et, en option, pour les prises de vue supplémentaires, des types d'éclairage supplémentaires étant utilisés pour éclairer la bande de matériau (10).

7. Procédé selon l'une quelconque des revendications précédentes, **caractérisé en ce qu'**un champ de vision de la caméra (110) est conçu pour couvrir au moins toute la largeur de la bande de matériau, le champ de vision de la caméra (110) dans la direction de la largeur de la bande de matériau (x) étant notamment plus grande que la largeur de la bande de matériau ; en option, les première et deuxième surfaces partielles actives (22, 24) étant réglées sur la base d'un signal d'un capteur de position de bande de matériau, notamment une taille et/ou une position des première et deuxième surfaces partielles actives (22, 24) étant réglée dans la direction de la largeur de la bande de matériau (x).

8. Dispositif d'observation et/ou d'inspection de bandes de matériau qui se déplacent dans la direction d'une longueur de bande de matériau (y) et/ou d'une largeur de bande de matériau (x), comprenant :
une caméra (110) qui comporte une puce matricielle (20), des surfaces partielles de la puce matricielle (20) pouvant être activées indépendamment ; et
une unité de commande ;
l'unité de commande étant conçue pour faire en sorte que
exclusivement une première surface partielle (22) de la puce matricielle (20) est activée pour réaliser une première prise de vue d'une première portion de la bande de matériau (10) à un premier instant ;
exclusivement une deuxième surface partielle (24) de la puce matricielle (20) est activée pour réaliser une deuxième prise de vue d'une deuxième portion de la bande de matériau (10) à un deuxième instant ;
la première surface partielle active (22) et la deuxième surface partielle active (24) n'étant pas identiques ;
l'unité de commande étant conçue pour sélectionner la première et la deuxième surface partielle active (22, 24) de telle sorte que la deuxième surface partielle active (24) est décalée par rapport à la première surface partielle active (22) d'un décalage prédéfini dans la direction de la longueur de la bande de matériau (y) et/ou dans la direction de la largeur de la bande de matériau (x) ; et
un décalage temporel entre la première et la deuxième prise de vue étant soit prédéfini de manière fixe, soit adapté en fonction du mouvement de la bande de matériau et étant dépendant d'un premier déclencheur, qui déclenche la première prise de vue au premier instant, et d'un deuxième déclencheur, qui déclenche la deuxième prise de vue au deuxième instant.

9. Dispositif selon la revendication 8, **caractérisé en ce qu'**une taille et/ou une position des première et deuxième surfaces partielles actives (22, 24) de la puce matricielle (20) et ainsi le champ de vision de la caméra (110) peuvent être adaptés de manière dynamique dans la direction de la longueur de la bande de matériau (y) et/ou dans la direction de la largeur de la bande de matériau (x).

10. Dispositif selon la revendication 8 ou la revendication 9, **caractérisé en ce que** la première portion et la deuxième portion sont deux portions de bande de matériau identiques ; ou **en ce que** la première portion et la deuxième portion sont deux portions de bande de matériau différentes.

11. Dispositif selon l'une quelconque des revendications 8 à 10, **caractérisé en ce que** le dispositif (100) possède un premier appareil d'éclairage (120, 130), de sorte que la bande de matériau (10) pour les première et deuxième prises de vue peut être éclairée avec un premier type d'éclairage ; ou **en ce que**
le dispositif (100) possède des premier et deuxième appareils d'éclairage (120, 130), de sorte qu'un premier type d'éclairage peut être utilisé pour la première prise de vue de la bande de matériau (10) et qu'un deuxième type d'éclairage peut être utilisé pour la deuxième prise de vue de la bande de matériau (10).

12. Dispositif selon la revendication 11, **caractérisé en ce que** l'unité de commande est conçue pour faire en sorte que, parmi une pluralité de portions de la bande de matériau (10) qui se succèdent dans la direction de la longueur de la bande de matériau (y), une première prise de vue soit réalisée avec le premier type d'éclairage et une deuxième prise de vue avec le deuxième type d'éclairage, les premières prises de vue produisant ensemble une première séquence d'images de la bande de matériau (10) et les deuxièmes prises de vue produisant une deuxième séquence d'images de la bande de matériau (10).

13. Dispositif selon la revendication 11 ou la revendication 12, **caractérisé en ce que** l'unité de commande est conçue pour faire en sorte que d'autres surfaces partielles de la puce matricielle (20) soient activées pour réaliser des prises de vue supplémentaires de portions supplémentaires correspondantes à des instants supplémentaires correspondants, les portions supplémentaires étant identiques à la première portion et/ou à la deuxième portion et, en option, le dispositif comportant des moyens d'éclairage supplémentaires, de sorte la bande de matériau (10) peut être éclairée avec des types d'éclairage supplémentaires pour les prises de vue supplémentaires.

14. Dispositif selon l'une quelconque des revendications 8 à 13, **caractérisé en ce qu'**une pluralité de caméras comprenant une puce matricielle (20) sont présentes, les caméras étant disposées de manière répartie sur la largeur de la bande de matériau, de sorte que les champs de vision de la pluralité de caméras sont contigus ou se chevauchent dans la direction de la largeur de la bande de matériau (x), l'unité de commande étant conçue pour faire en sorte que la pluralité de caméras réalisent des première et deuxième prises de vue correspondantes, et que les première et deuxième prises de vue soient assemblées en deux séquences d'images cohérentes.

15. Dispositif selon l'une quelconque des revendications 8 à 14, **caractérisé en ce qu'**au moins une caméra (110) est présente sur un côté avant de la bande de matériau (10) et au moins une caméra est présente sur un côté arrière de la bande de matériau (10), l'unité de commande étant conçue pour faire en sorte que des première et deuxième prises de vue du côté avant et du côté arrière de la bande de matériau (10) soient respectivement réalisées.
